# EUROPEAN PATENT APPLICATION

(11) **EP 1 552 867 A1**
(43) Date of publication of application: **13.07.2005**
(21) Application number: 03736314.0
(22) Date of filing: 01.07.2003
(51) Int. Cl.: A63F 13/12, A63F 13/00, A63F 13/10

(54) **GAME SYSTEM, GAME SYSTEM CONTROL METHOD, AND PROGRAM**

(30) Priority: 30.09.2002 JP 2002287983
(71) Applicant: Konami Corporation, Chiyoda-ku, Tokyo 100-6330 (JP)
(72) Inventor: AOKI, Jun, c/o Konami Corporation, Tokyo 100-6330 (JP)
(74) Representative: Winter, Brandl, Fürniss, Hübner, Röss, Kaiser, Polte Partnerschaft Patent- und Rechtsanwaltskanzlei
(86) International application number: PCT/JP2003/008319
(87) International publication number: WO 2004/030780

(57) **Abstract**

A network game system capable of representing a sense of the existence of players other than the immediate contest opponent, with a light communication load. In a game system for serving multiple contest games, a game server (12) used together with multiple game terminals includes a contest pairing determination part (22) for determining contest pairings in contest games; a contest game start command part (32) for transmitting a contest game start command to game terminals corresponding to contest pairings determined by the contest pairing determination part (22) ; a parameter change command destination determining part (26) for, when in a contest game executed by game terminals in accordance with the contest game start command a predetermined game event such as a point-scoring occurs, receiving event details data expressing details of the predetermined game event and determining destinations of parameter change commands corresponding with the event details data; and a parameter change command part (36) for sending the parameter change commands to the destinations determined by the parameter change command destination determining part (26).

## Description

### TECHNICAL FIELD

This invention relates to a game system and a game system control method and program, and particularly to a game system for serving multiple contest games.

### BACKGROUND ART

Network game systems which conduct multiple contest games by communication and decide a champion on the basis of a tournament format or a league format have been proposed. With a network game of this kind, for example in the field of baseball games or soccer games or the like, it is possible to realize a competition on a national scale or a global scale.

When this kind of network game system is realized by each contest game being conducted by the contest pairings alone and only management such as the determination of the next contest opponents and the determination of the champion being carried out by a game server, events occurring in a given contest pairing do not influence the contest games of other contest pairings. Consequently, although it is called a network game, there is little sense of the existence of players other than the immediate contest opponent, and there is a risk of it not being possible to realize the real interest of a network game. On the other hand, if events occurring in all the contest pairings are reported among the contest pairings, there is the problem that the communication load becomes excessive.

The present invention was made in view of these problems, and an object of the invention is to provide a network game system and a control method and program of a network game system that can represent a sense of the existence of players other than the immediate contest opponent with a light communication load.

### DISCLOSURE OF THE INVENTION

To solve the above-mentioned problems, a network game system according to the invention is a game system including a game server and multiple game terminals for serving multiple contest games. Here, the game server includes contest pairing determination means for determining contest pairings in the contest games and contest game start command part means for transmitting contest game start commands to game terminals corresponding to contest pairings determined by the contest pairing determining means.

The game terminals each include parameter storing means for storing a parameter relating to a contest subject corresponding to the game terminal; contest game processing execution means for, in accordance with a contest game start command transmitted by the contest game start command part means, executing contest game processing based on the parameter stored in the parameter storing means; and event details data transmitting means for, when a predetermined game event occurs in contest game processing executed by the contest game processing execution means, transmitting event details data expressing details of the predetermined game event occurred, to the game server.

The game server further includes event details receiving means for receiving event details data transmitted from the event details data transmitting means; parameter change command destination determining means for determining one or more destinations of a parameter change command corresponding to event details data received by the event details receiving means; and parameter change commanding means for sending the parameter change command to the destinations determined by the parameter change command destination determining means.

Each of the game terminals further includes parameter updating means for, when receiving a parameter change command from the parameter change commanding means, updating the parameter stored in the parameter storing means in accordance with the content of the parameter change command.

A game system control method according to the invention is a control method for a game system including a game server and multiple game terminals for serving multiple contest games, characterized in that it includes: a contest pairing determining step of, in the game server, determining contest pairings of the contest games; a contest game start command step of, in the game server, transmitting contest game start commands to game terminals corresponding to contest pairings determined by the contest pairing determining step; a contest game processing executing step of, in the game terminals, in accordance with a contest game start command transmitted in the contest game start command step, executing contest game processing based on a parameter relating to a contest subject corresponding to the game terminal stored in parameter storing means; an event details data transmitting step of, in the game terminal, when a predetermined game event occurs in contest game processing carried out in the contest game processing executing step, transmitting event details data expressing details of the predetermined game event that has occurred, to the game server; an event details receiving step of, in the game server, receiving event details data transmitted in the event details data transmitting step; a parameter change command determining step of, in the game server, determining one or more destinations of a parameter change command corresponding to event details data received in the event details receiving step; a parameter change commanding step of, in the game server, sending the parameter change command to the destinations determined in the parameter change command destination determining step, and a parameter updating step of, in the game terminal, when receiving the parameter change command, updating parameters stored in the parameter storing means in accordance with the content of the parameter change command.

A game server according to the invention is a game server used together with multiple game terminals in a game system for serving multiple contest games, characterized in that it includes: contest pairing determining means for determining contest pairings in the contest games; contest game start command means for transmitting contest game start commands to game terminals corresponding to contest pairings determined by the contest pairing determining means; parameter change command destination determining means for, when a predetermined game event has occurred in a contest game executed in one of the game terminals in accordance with a contest game start command, receiving event details data which express details of the predetermined game event and determining one or more destinations of a parameter change command corresponding to the event details data; and parameter change commanding means for sending the parameter change command to the destinations determined by the parameter change command destination determining means.

A game terminal according to the invention is a game terminal used together with a game server and other game terminals in a game system for providing multiple contest games, characterized in that it includes: parameter storing means for storing a parameter relating to a contest subject corresponding to the game terminal; contest game processing executing means for, in accordance with a contest game start command transmitted from contest game start command means, executing contest game processing based on the parameter stored in the parameter storing means; event details data transmitting means for, when a predetermined game event occurs in contest game processing executed by the contest game processing executing means, transmitting event details data expressing details of the predetermined game event occurred, to the game server; and parameter updating means for, when receiving a parameter change command corresponding to event details data pertaining to another game terminal, updating the parameter stored in the parameter storing means in accordance with the content of the parameter change command.

A program according to the invention is a program for causing a computer to function as a game server used together with multiple game terminals in a game system for serving multiple contest games, characterized in that it causes the computer to function as: contest pairing determining means for determining contest pairings in the contest games; contest game start command means for transmitting contest game start commands to game terminals corresponding to contest pairings determined by the contest pairing determining means; parameter change command destination determining means for, when a predetermined game event has occurred in a contest game executed in a game terminal in accordance with a contest game start command, receiving event details data which express details of the predetermined game event and determining one or more destinations of a parameter change command corresponding to the event details data; and parameter change commanding means for sending the parameter change command to the destinations determined by the parameter change command destination determining means.

A program according to the invention is program for causing a computer to function as a game terminal used together with a game server and other game terminals in a game system for providing multiple contest games, characterized in that it causes the computer to function as: parameter storing means for storing a parameter relating to a contest subject corresponding to the game terminal; contest game processing executing means for, in accordance with a contest game start command transmitted from contest game start command means, executing contest game processing based on the parameters stored in the parameter storing means; event details data transmitting means for, when a predetermined game event occurs in contest game processing executed by the contest game processing executing means, transmitting event details data expressing details of the predetermined game event that has occurred, to the game server; and parameter updating means for, when receiving a parameter change command corresponding to event details data pertaining to another game terminal, updating the parameter stored in the parameter storing means in accordance with the content of the parameter change command.

In this invention, when, in contest game processing executed by a game terminal, a predetermined game event such as the scoring of a point occurs, event details data (data) expressing details of the predetermined game event is transmitted to the game server. Then, in the game server, destinations of parameter change commands corresponding to the event details data are determined. For example, when, in a certain contest pairing, a point-scoring event has occurred, a contest pairing pertaining to a counterpart match to that one may be made a destination of a parameter change command. The game server sends parameter change commands to the destinations determined in this way. After that, game terminals receive these parameter change commands and update parameters relating to contest subjects (for example sports teams or sports competitors or the like) corresponding to those game terminals. With this invention, because parameter change commands are sent to game terminals from the game server selectively, and game terminals update parameters relating to contest game processing in accordance with these, it is possible to represent a sense of the existence of other users participating in the network game well while keeping the communication load low.

In one form of the invention, the game server further includes contest pairings storing means for storing contest pairings determined by the contest pairing determination means, and the parameter change command destination determining means determines the destinations of parameter change commands on the basis of contest pairings stored in the contest pairings storing means.

In this case, for example it is possible for game terminals pertaining to contest pairings conducting counterpart matches to be set as destinations.

In another form of the invention, the game server further includes output command destination determining means for determining destinations of commands for the output of text, image or sound corresponding to event details data received by the event details receiving means, and output commanding means for sending the output commands to the destinations determined by the output command destination determining means, and the game terminals each further include output means for, when receiving an output command from the output commanding means, outputting text, image or sound corresponding to the event details data. In this case, it is possible for event details data in other game terminals to be directly or indirectly made known to players by text, image or sound (or a combination).

In yet another form of the invention, the game server further includes results storing means for storing results relating to contest subjects, and the parameter change command destination determining means determines the destinations of parameter change commands on the basis of the results relating to contest subjects stored in the results storing means. In this case, when a predetermined event has occurred for a certain contest subject, changes can be made to parameters relating to contest subjects with similar results, and close contest conditions can be represented well.

In a still further form of the invention, the parameter change commanding means includes parameter change command storing means for storing parameter change commands and reads out the parameter change commands from the parameter change command storing means and sends the parameter change commands to the destinations determined by the parameter change command destination determining means. The reading out of the parameter change commands and the sending of the parameter change commands to the destinations determined by the parameter change command destination determining means may be done for example when the next contest game starts or has started at the destination, or may be done when use of the game system has started at that destination.

In another form of the invention, the parameter updating means includes parameter change command storing means for, when receiving a parameter change command from the parameter change commanding means, storing the parameter change command, and reading out the parameter change command from the parameter change command storing means and updating parameters stored in the parameter storing means in accordance with the content of the parameter change command. The reading out of the parameter change command from the parameter change command storing means and the updating of the parameters stored in the parameter storing means in accordance with the content of the parameter change command may be done for example when, at the respective game terminal, the next contest game is started or has been started.

A game system according to the invention is a game system including a game server and multiple game terminals for serving multiple contest games, and the game server includes contest pairing determination means for determining contest pairings of the contest games and contest game start command part means for transmitting contest game start commands to game terminals corresponding to contest pairings determined by the contest pairing determination means.

The game terminals each include: parameter storing means for storing parameters relating to a contest subject corresponding to the game terminal; contest game processing execution means for, in accordance with a contest game start command transmitted from the contest game start command part means, executing contest game processing based on the parameters stored in the parameter storing means; and event details data transmitting means for, when a predetermined game event occurs in contest game processing executed by the contest game processing execution means, transmitting event details data expressing details of the predetermined game event to the game server.

The game server further includes event details receiving means for receiving event details data transmitted from the event details data transmitting means, output command destination determining means for determining destinations of output commands for the output of text, image or sound corresponding to event details data received by the event details receiving means, and output commanding means for sending the output commands to the destinations determined by the output command destination determining means.

The game terminals each further include output means for, when receiving an output command from the output commanding means, outputting text, image or sound corresponding to the event details data. In this case also, it is possible to represent a sense of the existence of players other than the immediate contest opponent with a light communication load.

### BRIEF DESCRIPTION OF THE DRAWINGS

Fig. 1 is a view showing the overall construction of a network game system according to an embodiment of the invention;
Fig. 2 is a view showing a screen example of when a baseball game is realized;
Fig. 3 is a view showing a screen example of when a soccer game is realized;
Fig. 4 is a functional block diagram of a game server;
Fig. 5 is a view showing an example of a user table;
Fig. 6 is a view showing an example of a team table;
Fig. 7 is a view showing an example of ranking table data;
Fig. 8 is a view showing an example of performance data;
Fig. 9 is a view showing an example of contest pairings data;
Fig. 10 is a functional block diagram of a game terminal; and
Fig. 11 is a view showing an example of parameters stored in a game terminal.

### BEST MODES FOR CARRYING OUT THE INVENTION

An embodiment of the invention will now be described in detail on the basis of the drawings.

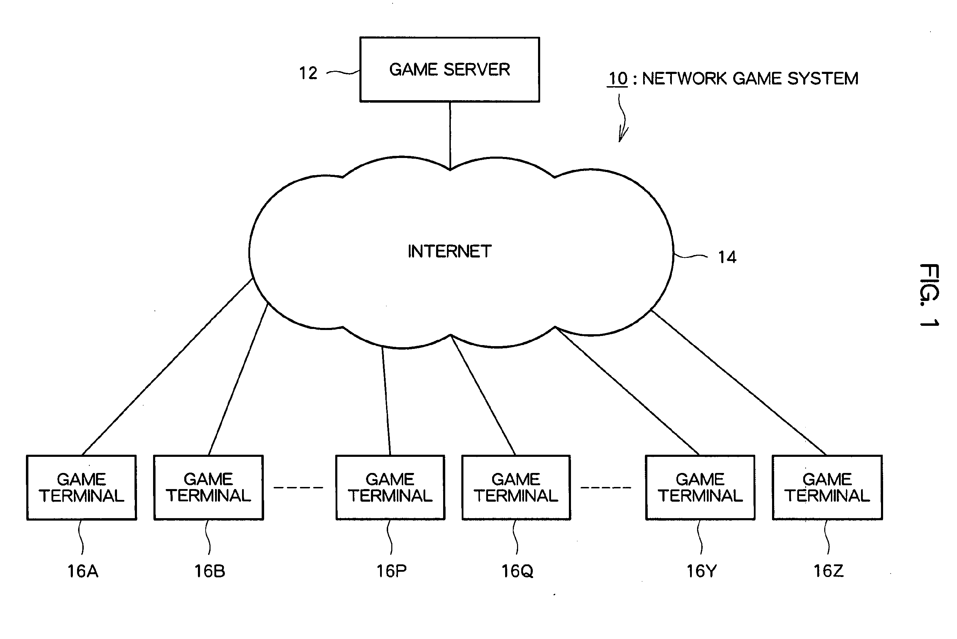

Fig. 1 is a view showing the overall construction of a network game system according to an embodiment of the invention. As shown in the figure, this network game system 10 includes a game server 12 and multiple game terminals 16A to 16Z. The game server 12 and the game terminals 16 are connected to the Internet 14, which is a data communication network, and are capable of reciprocal data communication.

The game server 12 is realized for example by means of a known server computer including a CPU, memory, a hard disk storage device, a display and input devices and so on, and has the function of managing a network game. Each of the game terminals 16 is realized for example by means of a known personal computer including a CPU, memory, a hard disc storage device, a display and input devices and so on, or a home game machine, a portable game machine, a commercial game machine, a portable telephone or a portable information terminal or the like, and is used by a user to play the network game.

In this network game system 10, players, who are the participants in the network game, are divided into multiple pairs, and use the game terminals 16A to 16Z to engage in contest play of a ball game, a hand-to-hand fighting game, a war game or a race game or the like, and, by repeating such contest play a predetermined number of times, eventually decide a champion. For this, the game server 12 decides contest pairings in advance or ad hoc on the basis of a tournament approach or a league approach or the like, and provides a contest game start command to the two game terminals 16 pertaining to each contest pairing.

The game terminals 16 have a common game program installed in them in advance, and start a game in accordance with the contest game start command. Contest play is realized by phenomena occurring in the two game terminals 16 as a result of game control carried out by the players being exchanged via the Internet 14 and made common. At this time, data communication between the two game terminals 16 pertaining to the contest game may be relayed by the game server 12 or may be conducted directly between the game terminals 16. For some contest pairings, in the game server 12 or a game terminal 16, the game control of one of the players may be carried out automatically. That is, for some contest pairings, a contest game may be played with a computer as the opponent instead of another player.

One characteristic feature of this network game system 10 is that an event such as the scoring of a point occurring in a certain contest is reported to the game server 12 from a game terminals 16, and parameter change commands are transmitted via the Internet 14 to the game terminals 16 pertaining to other contests to which that event is relevant. Another characteristic feature is that, with respect to these game terminals 16 pertaining to other contests to which the event is relevant, the output of a message, image or sound relating to the event is commanded. When a game terminal 16 receives a parameter change command, in correspondence with that it updates parameters relating to a contest subject (team or competitor or the like). Consequently, in correspondence with an event occurring in one contest, changes appear in the contest subjects of other contests. Also, when a game terminal 16 receives a command for the output of a message or the like, in correspondence with that it outputs a message by display or sound, and/or changes the image of a contest subject.

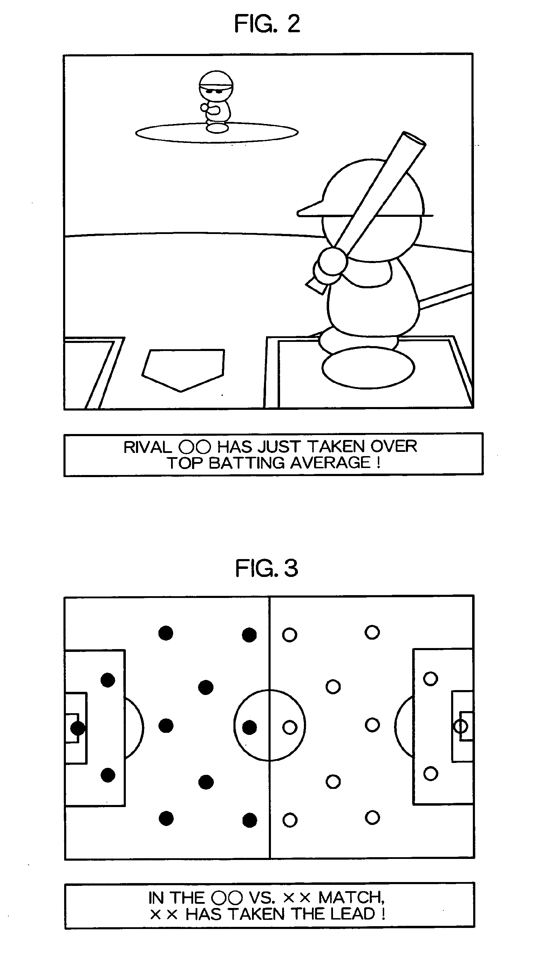

Fig. 2 shows an example of a game screen displayed on the display of a game terminal 16 in a case where a league-format or tournament-format baseball contest game is realized in the network game system 10. As shown in the figure, when a baseball contest game is being played, an image pertaining to a game subject (an image of an own team competitor) is displayed on the display, and an image pertaining to the contest opponent (an image of an opposition team competitor) is displayed on the display. Also, using an input device such as a game controller to control a contest subject, a baseball victory is fought for with a rival player or a computer. At this time, when an event such as a point or a hit occurs in another relevant contest, a window is displayed at the bottom of the screen, and a message showing details of that event is displayed there. This message may be one that shows the details of the event directly or may be one that shows them indirectly. Also, in the network game system 10, when an event such as a point or a hit occurs in another relevant contest, a change appears in the own team competitor image and/or the other team competitor image. For example, when, in another contest, a rival competitor with whom a certain competitor is competing on batting average makes a hit, the image of that certain competitor moves so that the competitor makes practice swings more forcefully. Also when, in another contest, a rival team wins, the competitor images move so that the competitors look disheartened.

The invention can also be applied to games other than baseball games. For example in a case where a league-format or tournament-format soccer contest game is realized, as shown in Fig. 3, an image of the pitch as seen from above is displayed on the display of the game terminal 16, and when an event such as a point occurs in another relevant contest, a message reporting that is displayed in a window at the bottom of the screen. At this time, in correspondence with the event, the formation of the own team and/or the opposing team changes to become more defensive or changes to become more offensive. Also, a change appears in a parameter relating to a striker competing to be a leading goal-scorer, for example a parameter showing a success rate of shots on goal.

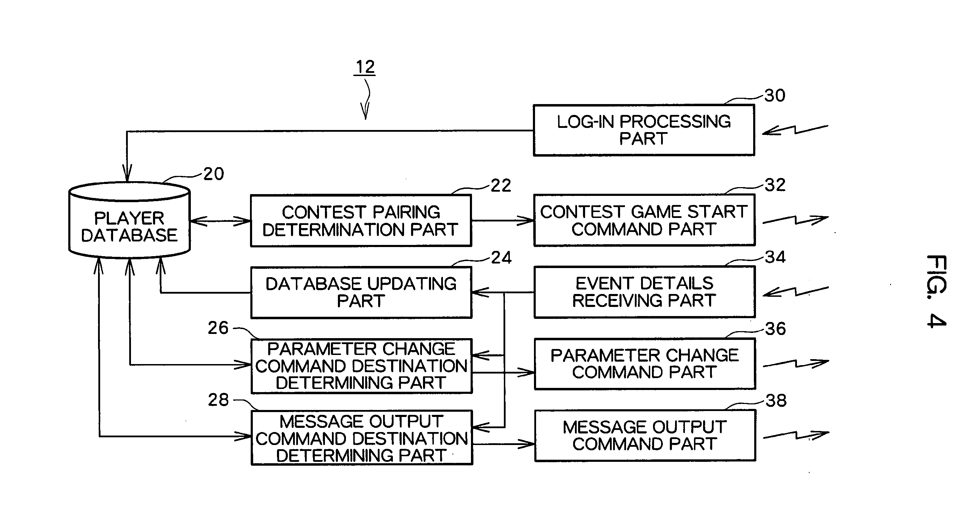

Fig. 4 is a functional block diagram focussing on, of the functions realized in the game server 12, those functions relating to the present invention. As shown in this figure, the functions realized in the game server 12 include a player database 20, a contest pairing determination part 22, a database updating part 24, a parameter change command destination determining part 26, a message output command destination determining part 28, a log-in processing part 30, a contest game start command part 32, an event details receiving part 34, a parameter change command part 36, and a message output command part 38. These functions are realized by the game server 12 executing a network game management program.

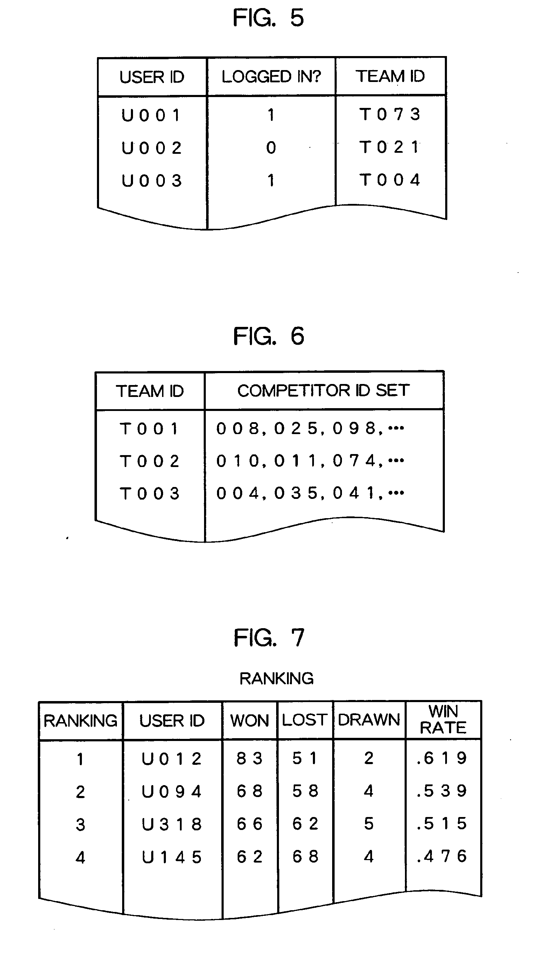

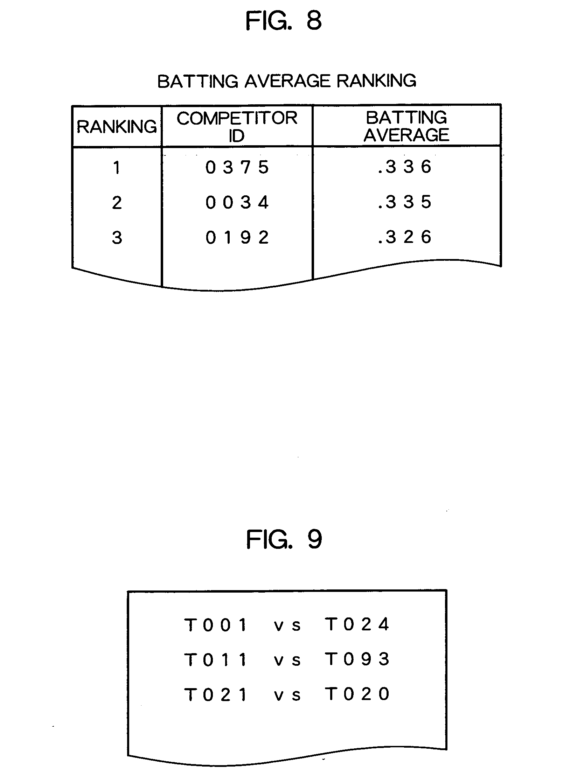

First, the player database 20 includes memory such as RAM and a hard disc storage device or the like for storing a user table, a team table, ranking table data, performance data and contest pairings data. Fig. 5 is a view showing an example of a user table. As shown in this figure, a user table associates log-in flags and team IDs with user IDs. Here, a user ID is information identifying a participant in the network game. A log-in flag is a flag showing whether or not the corresponding user is presently logged in to the game server 12 from a game terminal 16. A team ID is information identifying a baseball team that the corresponding user is to make the object of game control as a contest subject. Fig. 6 is a view showing an example of a team table. As shown in this figure, a team table associates a competitor ID set with a team ID. Here, a competitor ID set is competitor IDs identifying all the members of the baseball team identified by the team ID stored in association with them in the same table. Fig. 7 is a view showing an example of ranking table data. Ranking table data records rankings and ranking details (number of games won, number of games lost, number of games drawn, win rate) of all the users in the network game. Fig. 8 is a view showing an example of performance data. Performance data is recorded rankings and results of those elements (competitors) constituting a contest subject (team) controlled by a player whose individual results are excellent in a certain field. Fig. 9 is a view showing an example of contest pairings data. Contest pairings data is team IDs of baseball teams currently in contests, paired in accordance with the contest pairings. By referring to this contest pairings data, the game server 12 can determine which team is currently contesting with which team.

The log-in processing part 30, when accessed from a game terminal 16, receives a log-in request together with a user ID and a password, and, if the password is valid, authorizes the provision of the network game to the player pertaining to the user ID and records in the player database 20 that the user is currently logged in. Specifically, it updates the log-in flag corresponding to the user ID of the logged-in user in the user table recorded in the player database 20 so that it shows that the user is logged in.

The contest pairing determination part 22 determines contest pairings in tournament format or league format on the basis of the content stored in the player database 20. That is, the contest pairing determination part 22 pairs-off users in the user table whose log-in flags are 'logged in', in twos. It then generates contest pairings data by making pairs of the team IDs of the baseball teams that those users make their objects of control as contest subjects, and stores them in the player database 20. The contest game start command part 32 transmits contest game start commands to the game terminals 16 corresponding to the contest pairings determined by the contest pairing determination part 22 via the Internet 14.

The event details receiving part 34 receives event details data transmitted from the game terminals 16 via the Internet 14.

Event details data includes an ID identifying the event type and competitor IDs of competitors involved in the event (for example when a home run event has occurred, the competitor IDs of the hitter who hit the home run and of the pitcher).

The parameter change command destination determining part 26 determines destinations of parameter change commands according to the event details data received by the event details receiving part 34. For example, on the basis of contest pairings data stored in the player database 20, the parameter change command destination determining part 26 determines game terminals 16 engaged in counterpart matches as parameter change command destinations. On the basis of the results relating to contest subjects, i.e. the ranking table data and performance data, stored in the player database 20, the parameter change command destination determining part 26, for example, determines, as parameter change command destinations, game terminals 16 at which contests involving rival teams, or teams to which rival competitors belong, are being conducted. The parameter change command part 36 transmits parameter change commands to the destinations (game terminals 16) determined by the parameter change command destination determining part. These parameter change commands include IDs specifying parameter types. In this way, on the basis of the occurrence of a predetermined game event in a certain contest pairing, parameter change commands are transmitted to other game terminals 16 to which that game event is very relevant. Also, by incorporating storing means such as memory into the parameter change command part 36 so that parameter change commands can be temporarily stored in the storing means, a parameter change command may be read out from there and transmitted at a timing corresponding to the state of the game terminal 16 that is the destination of the parameter change command (whether or not a contest game is in progress, whether or not it is logged in to the game server 12, and so on) to the game terminal 16.

When, for some of the contest pairings, a computer such as the game server 12 or a game terminal 16 is serving as a contest opponent of a player, the parameter change command destination determining part 26 may determine them to be the destinations of parameter change commands. When the parameter change command destination determining part 26 has received event details data from a game terminal 16, it does not necessarily have to transmit corresponding parameter change commands somewhere, and may alternatively make only event details data relating to teams whose results are above a predetermined level or event details data relating to competitors whose results are above a predetermined level the object of parameter change commands.

The message output command destination determining part 28 determines destinations of commands ordering the output of text or sound (message) or an image (image of a competitor making practice swings) corresponding to event details data received by the event details receiving part 34. The message output command part 38 sends the output commands to the destinations determined by the message output command destination determining part 28.

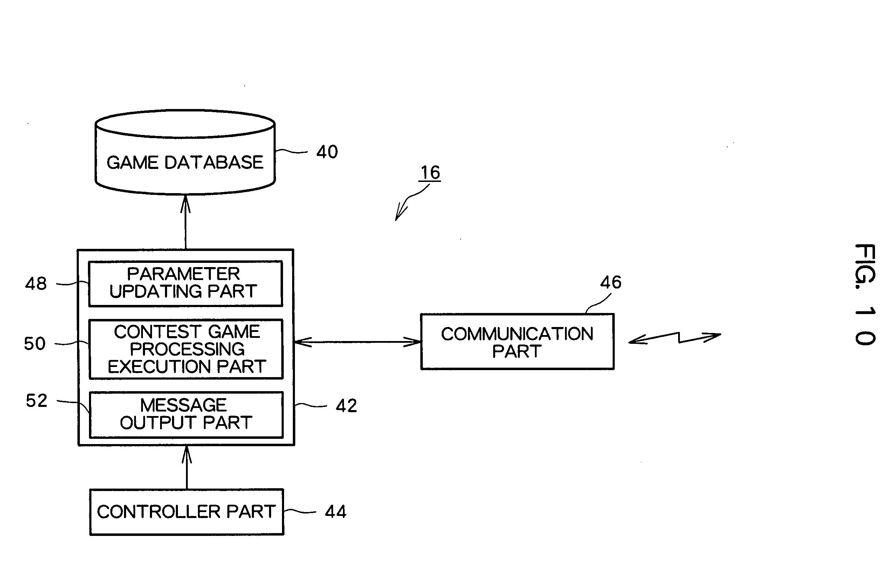

Next, Fig. 10 is a functional block diagram focussing on, of the functions realized in the game terminals 16, those which relate to the invention. As shown in the figure, the functions realized in a game terminal 16 include a game database 40, a control part 42, an operating part 44 and a communication part 46. The operating part 44 includes a parameter updating part 48, a contest game processing execution part 50 and a message output part 52. These functions are realized by the game terminal 16 executing a network game program.

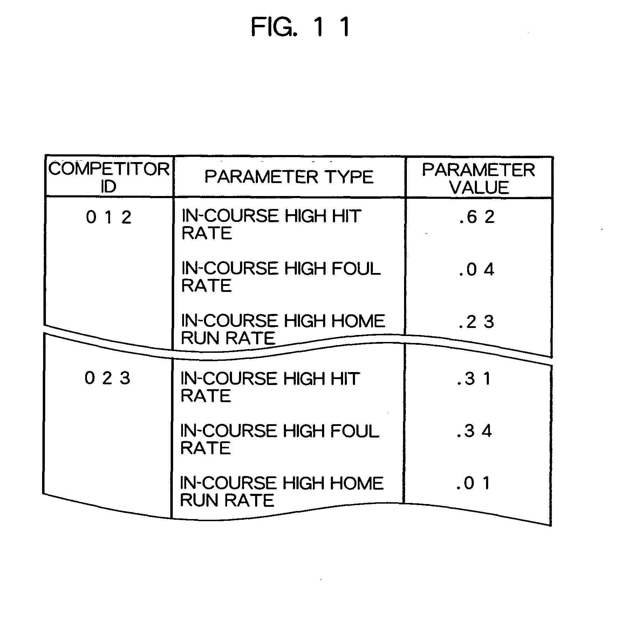

First, the game database 40 stores parameters of a baseball team to be a contest subject. Fig. 11 is a view showing an example of parameters stored in the game database 40. As shown in the figure, various parameters of all the competitors belonging to a team to be a contest subject are stored in the game database 40. Besides this, parameters (not shown) for determining the behavior of the team as a whole are also stored in the game database 40.

When receiving a contest game start command transmitted by the contest game start command part 32, the contest game processing execution part 50 executes contest game processing on the basis of the parameters stored in the game database 40. At this time, the contest game processing execution part 50 displays a contest scene on the display and outputs various sounds such as cheers, stadium announcements and noises of hits through speakers. Also, when in a contest game a predetermined event, specifically a point-scoring event or a hit event, occurs, it commands the communication part 46 to transmit event details data including data specifying the type of the event (an event type specification ID) and the competitor IDs of the competitors involved in the event. The communication part 46 then transmits that event details data to the game server 12.

The parameter updating part 48, when it receives a parameter change command from the game server 12, updates the parameters stored in the game database 40 in accordance with the content of the parameter update command. Optionally, by incorporating storing means such as a memory into the parameter updating part 48 and storing the parameter change command in the storing means, the parameter change command may be read out and the parameters may be changed in accordance with its content at a timing corresponding to the state of the game terminal 16 (for example whether or not a contest game is in progress). The message output part 52, when it receives from the game server 12 a command for the output of a message or the like, correspondingly effects a change in a competitor image and/or displays a message showing details of an event and/or outputs a message by audio.

With the network game system 10 described above, it is possible for a game event occurring in a certain contest pairing to be reported to the game terminals of other players to which it is deeply relevant, and for games to be changed correspondingly. For example, in a baseball contest game like that described above, if a certain competitor hits a home run, the parameters of a rival of that competitor change. For example a long-hitting ability parameter is raised and a hit rate parameter is lowered. By this means, the competitor can give a good appearance of being stimulated by the activity of a rival. Also, if a certain competitor hits a home run off a pitch with a certain course, a computer to contest with that competitor thereafter can represent a performance of not pitching on the same course.

The invention is not limited to the embodiment described above.

For example, if the invention is applied to a soccer contest game and a certain competitor scores a goal, movement speed parameters, ball capture success rate parameters and shooting success rate parameters and so on of rival competitors may be changed. At this time, changes may be made to the parameters of individual competitors, and changes may be made to the parameters of teams as a whole. Alternatively, changes may be made to the individual parameters of all the members of a team. Also, when the invention is applied to a hand-to-hand fighting contest game and a certain competitor in another contest suffers an injury, changes may be made to the parameters of other competitors in correspondence with that. Also, the parameter change command destination determining part 26 may be made such that from a game terminal 16 a player can set which team/competitor's parameters will be changed when which event relating to which team/competitor has occurred, and the destinations of parameter change commands then determined on the basis of these set details. When this is done, players can set rival relationships and so on themselves.

### INDUSTRIAL APPLICABILITY

As described above, by applying this invention to game machines, for example, it is possible to represent a sense of the existence of players other than the immediate contest opponent with a relatively light communication load.

## Claims

1. A game system including a game server and multiple game terminals for serving multiple contest games, **characterized in that**
the game server includes
contest pairing determination means for determining contest pairings of the contest games, and
contest game start command means for transmitting contest game start commands to game terminals corresponding to contest pairings determined by the contest pairing determination means,
and the game terminals each include
parameter storing means for storing a parameter relating to a contest subject corresponding to the game terminal,
contest game processing execution means for in accordance with a contest game start command transmitted from the contest game start command means, executing contest game processing based on the parameter stored in the parameter storing means and
event details data transmitting means for, when a predetermined game event occurs in contest game processing executed by the contest game processing execution means, transmitting event details data expressing details of the predetermined game event that has occurred to the game server,
and the game server further includes
event details receiving means for receiving event details data transmitted from the event details data transmitting means,
parameter change command destination determining means for determining one or more destinations of a parameter change command corresponding to event details data received by the event details receiving means, and
parameter change commanding means for sending the parameter change command to the destinations determined by the parameter change command destination determining means,
and the game terminals each further include
parameter updating means for, when receiving a parameter change command from the parameter change commanding means, updating the parameter stored in the parameter storing means in accordance with content of the parameter change command.

2. A game system according to claim 1, **characterized in that**
the game server further includes
output command destination determining means for determining one or more destinations of a command for the output of text, image or sound corresponding to event details data received by the event details receiving means, and
output commanding means for sending the output command to the destinations determined by the output command destination determining means,
and the game terminals each further include
output means for, when receiving an output command from the output commanding means, outputting text, image or sound corresponding to the event details data.

3. A game system according to claim 1 or claim 2,
**characterized in that**
the game server further includes
contest pairings storing means for storing the contest pairings determined by the contest pairing determination means,
and the parameter change command destination determining means determines the destinations of the parameter change command on the basis of the contest pairings stored in the contest pairings storing means.

4. A game system according to any one of claim 1 through claim 3, **characterized in that**
the game server further includes
results storing means for storing results relating to each of contest subjects,
and the parameter change command destination determining means determines the destinations of the parameter change command on the basis of the results relating to the contest subjects stored in the results storing means.

5. A game system according to any one of claim 1 through claim 4, **characterized in that**
the parameter change commanding means includes parameter change command storing means for storing the parameter change command and reading out the parameter change command from the parameter change command storing means and sending the parameter change command to the destinations determined by the parameter change command destination determining means.

6. A game system according to any one of claim 1 through claim 4, **characterized in that**
the parameter updating means includes parameter change command storing means for, when receiving the parameter change command from the parameter change commanding means, storing the parameter change command, and reading out the parameter change command from the parameter change command storing means and updating the parameter stored in the parameter storing means in accordance with content of the parameter change command.

7. A control method of a game system including a game server and multiple game terminals for serving multiple contest games, **characterized in that** it includes
a contest pairing determining step of, in the game server, determining contest pairings of the contest games,
a contest game start command step of, in the game server, transmitting contest game start commands to game terminals corresponding to contest pairings determined by the contest pairing determining step,
a contest game processing executing step of, in the game terminals, in accordance with a contest game start command transmitted in the contest game start command part step, executing contest game processing based on a parameter relating to a contest subject corresponding to the game terminal stored in parameter storing means,
an event details data transmitting step of, in the game terminal, when a predetermined game event occurs in contest game processing carried out in the contest game processing executing step, transmitting event details data expressing details of the predetermined game event that has occurred, to the game server,
an event details receiving step of, in the game server, receiving event details data transmitted in the event details data transmitting step,
a parameter change command destination determining step of, in the game server, determining one or more destinations of a parameter change command corresponding to event details data received in the event details receiving step,
a parameter change commanding step of, in the game server, sending the parameter change command to the destinations determined in the parameter change command destination determining step, and
a parameter updating step of, in the game terminal, when receiving the parameter change command, updating parameters stored in the parameter storing means in accordance with content of the parameter change command.

8. A game server used together with multiple game terminals in a game system for serving multiple contest games, **characterized in that** it includes
contest pairing determining means for determining contest pairings in the contest games,
contest game start command part means for transmitting contest game start commands to game terminals corresponding to contest pairings determined by the contest pairing determining
means,
parameter change command destination determining means for, when a predetermined game event has occurred in a contest game executed in a game terminal, receiving event details data which express details of the predetermined game event and determining one or more destinations of a parameter change command corresponding to the event details data, and
parameter change commanding means for sending the parameter change command to the destinations determined by the parameter change command destination determining means.

9. A game terminal used together with a game server and other game terminals in a game system for providing multiple contest games, **characterized in that** it includes
parameter storing means for storing a parameter relating to a contest subject corresponding to the game terminal,
contest game processing executing means for, in accordance with a contest game start command transmitted from contest game start command part means, executing contest game processing based on the parameter stored in the parameter storing means,
event details data transmitting means for, when a predetermined game event occurs in contest game processing executed by the contest game processing executing means, transmitting event details data expressing details of the predetermined game event occurred, to the game server, and
parameter updating means for, when receiving a parameter change command corresponding to event details data pertaining to another game terminal, updating the parameter stored in the parameter storing means in accordance with content of the parameter change command.

10. A program for causing a computer to function as a game server used together with multiple game terminals in a game system for serving multiple contest games, **characterized in that** it causes the computer to function as
contest pairing determining means for determining contest pairings in the contest games,
contest game start command part means for transmitting contest game start commands to game terminals corresponding to contest pairings determined by the contest pairing determining means,
parameter change command destination determining means for, when a predetermined game event has occurred in a contest game executed in a game terminal in accordance with a contest game start command, receiving event details data which express details of the predetermined game event and determining one or more destinations of a parameter change command corresponding to the event details data, and
parameter change commanding means for sending the parameter change command to the destinations determined by the parameter change command destination determining means.

11. A program for causing a computer to function as a game terminal used together with a game server and other game terminals in a game system for providing multiple contest games, **characterized in that** it causes the computer to function as
parameter storing means for storing a parameter relating to a contest subject corresponding to the game terminal,
contest game processing executing means for, in accordance with a contest game start command transmitted from contest game start command means, executing contest game processing based on the parameter stored in the parameter storing means,
event details data transmitting means for, when a predetermined game event occurs in contest game processing executed by the contest game processing executing means, transmitting event details data expressing details of the predetermined game event that has occurred, to the game server, and
parameter updating means for, when receiving a parameter change command corresponding to event details data pertaining to another game terminal, updating the parameter stored in the parameter storing means in accordance with content of the parameter change command.

12. A game system including a game server and multiple game terminals for serving multiple contest games, **characterized in that**
the game server includes
contest pairing determination means for determining contest pairings of the contest games, and
contest game start command means for transmitting contest game start commands to game terminals corresponding to contest pairings determined by the contest pairing determination means,
and the game terminals each include
parameter storing means for storing a parameter relating to a contest subject corresponding to the game terminal,
contest game processing execution means for, in accordance with a contest game start command transmitted from the contest game start command means, executing contest game processing based on the parameter stored in the parameter storing means, and
event details data transmitting means for, when a predetermined game event occurs in contest game processing executed by the contest game processing execution means, transmitting event details data expressing details of the predetermined game event to the game server,
and the game server further includes
event details receiving means for receiving event details data transmitted from the event details data transmitting means,
output command destination determining means for determining one or more destinations of an output command for outputting text, image or sound corresponding to event details data received by the event details receiving means, and
output commanding means for sending the output command to the destinations determined by the output command destination determining means,
and the game terminals each further include
output means for, when receiving an output command from the output commanding means, outputting text, image or sound corresponding to the event details data.

13. An information storage medium storing a program according to claim 10 or claim 11.
